# DEMANDE DE BREVET EUROPEEN

(11) **EP 4 664 042 A1**
(43) Date de publication de la demande: **17.12.2025**
(21) Numéro de dépôt: 25171544.7
(22) Date de dépôt: 22.04.2025
(51) Int. Cl.: F25J 3/02

(54) **PROCÉDÉ DE PURIFICATION DE CO2**

(30) Priorité: 11.06.2024 FR 2406177
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: LECLERC, Mathieu, 94503 CHAMPIGNY SUR MARNE (FR)
(74) Mandataire: Air Liquide

(57) **Abrégé**

Deux débits contenant du CO₂ (1F, 2F) avec des puretés différentes sont séparés dans une colonne de distillation commune (K), sans avoir été comprimés ou épurés en eau ensemble.

## Description

La présente invention est relative à un procédé de purification de CO2.

Le CO2 provenant de procédés de capture par voie cryogénique peut être combiné avec celui d'unités de capture par voie non cryogénique comme le lavage aux amines par exemple afin d'être envoyés conjointement dans une canalisation d'export et/ou dans un liquéfacteur de CO2.

Il est alors possible de procéder à la compression du CO2 provenant de l'unité cryogénique au moins partiellement en commun avec l'étape de compression du CO2 de l'unité non cryogénique. Seul un séchage du CO2 de l'unité non cryogénique est requis, s'il en contient, la teneur en eau dans ce CO2 étant généralement trop élevée par rapport aux contraintes d'export et/ou de liquéfaction.

La pureté du CO2 provenant de l'unité cryogénique est plus souvent bien plus élevée que celle provenant d'autres technologies. Les spécifications en termes de qualité (teneur en impureté) du CO2 pour séquestration évoluent régulièrement et ont tendance à être de plus en plus contraignantes.

Il est connu d'utiliser un gaz de régénération provenant d'une unité cryogénique dans une unité de séparation de CO2 provenant de lavage aux amines.

WO 2022/152629 propose une compression et un séchage du CO2 provenant de lavage aux amines en utilisant un fluide de l'unité de cryogénique comme gaz de régénération du sécheur.

FR2975478A décrit la séparation de deux débits de CO2 ayant des puretés différentes mais les traite dans des colonnes indépendantes.

US9784498 prévoit des méthodes de séparation différentes selon la pureté du débit de CO2 à traiter.

### PROBLÈME RÉSOLU PAR L'INVENTION

L'invention propose une amélioration du procédé de WO 2022/152629 car, dans ce procédé, le CO2 provenant du lavage aux amines est seulement séché mais pas purifié en molécules légères. Seule la dilution avec le CO2 de l'unité cryogénique permet d'obtenir une pureté moyenne qui n'est pas nécessairement compatible avec la spécification en CO2 produit.

### DESCRIPTION DE L'INVENTION

L'invention peut dans certains cas consister à :
- Eventuellement comprimer séparément le CO2 provenant d'une unité de capture non cryogénique
- Eventuellement sécher séparément ce CO2
- Le refroidir jusqu'à des températures permettant la distillation
- Injecter ce CO2 séché et refroidi dans la colonne à distiller les légers d'une unité de capture de CO2 par voie cryogénique.

L'invention peut comprendre les variantes/étapes suivantes :
- L'échangeur de chaleur permettant la séparation cryogénique peut être commun avec l'échangeur permettant le refroidissement du CO2 provenant d'une unité de capture non cryogénique.
- Le CO2 refroidi peut être partiellement condensé, la phase liquide étant injectée dans la colonne pour purification conjointe avec le CO2 liquide de l'unité cryogénique. La phase gaz peut être aussi injectée dans la colonne ou mélangée avec le gaz de tête de la colonne, ou recyclé dans une autre étape du procédé cryogénique (en amont de la condensation partielle) ou considéré comme un sous-produit.
- La pression après compression du CO2 provenant d'une unité de capture non cryogénique peut être supérieure à celle de la colonne à distiller. Dans ce cas, le CO2 après refroidissement (ou sa phase liquide et gaz) est détendu avant injection dans la colonne à distiller.
- Le CO2 provenant d'une unité de capture non cryogénique peut être injecté dans la colonne à distiller à un niveau différent que le CO2 liquide provenant de l'unité cryogénique ou au même niveau.

Cet arrangement permet de minimiser l'énergie de séparation du CO2 provenant, par exemple d'une unité de capture non cryogénique, en évitant de le diluer avec le gaz à traiter par l'unité cryogénique tout en permettant sa purification sans équipement supplémentaire (colonne à distiller commune).

Il permet également d'augmenter le rendement de récupération du CO2 provenant d'une unité de capture non cryogénique. S'il avait été mélangé avec le gaz à traiter par l'unité cryogénique, des pertes de CO2 seraient constatées correspondant au rendement de la condensation partielle de l'unité cryogénique. Dans le cas où le CO2 est directement injecté dans la colonne à distiller, seules les pertes par rebouillage sont appliquées et il est souvent considéré de recycler le gaz de tête de la colonne à distiller en amont de l'unité cryogénique afin de minimiser ces pertes.

Selon un objet de l'invention, il est prévu un procédé de purification de CO2 dans lequel :
i) On comprime un premier fluide comprenant au moins 35%v mais moins que 90%v en CO2 et contenant au moins une première impureté plus légère que le CO2, tel que le méthane, le monoxyde de carbone, le dihydrogène, l'azote, l'oxygène ou l'argon, on refroidit le premier fluide comprimé, on le condense partiellement générant une première phase gazeuse appauvrie en CO2 et enrichie en l'au moins une première impureté et une première phase liquide enrichie en CO2 et appauvrie en l'au moins une première impureté et on détend la première phase liquide.
ii) On comprime un deuxième fluide, autre que la première phase gazeuse ou liquide ou un fluide produit en séparant la première phase gazeuse ou liquide, comprenant au moins 95%v en CO2 et contenant au moins une deuxième impureté plus légère comme le méthane, le monoxyde de carbone, le dihydrogène, l'azote, l'oxygène ou l'argon, on refroidit le deuxième fluide comprimé soit en le condensant totalement soit en condensant le deuxième fluide comprimé et refroidi partiellement générant une deuxième phase gazeuse appauvrie en CO2 et enrichie en l'au moins une deuxième impureté et une deuxième phase liquide enrichie en CO2 et appauvrie en l'au moins une deuxième impureté et éventuellement on détend la deuxième phase liquide.
iii) On injecte la première phase liquide détendu et soit le deuxième fluide comprimé, refroidi et condensé soit la deuxième phase liquide, éventuellement détendu, dans une colonne à distiller générant une troisième phase gazeuse appauvrie en CO2 et enrichie en l'au moins une première impureté et une troisième phase liquide enrichie en CO2 et appauvrie en l'au moins une première impureté.

Selon d'autres aspects facultatifs de l'invention :
- la troisième phase gazeuse est enrichie en l'au moins une deuxième impureté et une troisième phase liquide est appauvrie en l'au moins une deuxième impureté.
- le premier fluide comprend une première impureté principale plus légère que le CO2 dont la teneur est plus grande que toute autre impureté plus légère que le CO2 du premier fluide et le deuxième fluide comprend une deuxième impureté principale plus légère que le CO2 dont la teneur est plus grande que toute autre impureté plus légère que le CO2 du deuxième fluide, la première impureté principale n'ayant pas la même composition chimique que la deuxième impureté principale.
- le premier fluide est un fluide autre que la deuxième phase gazeuse ou liquide ou un fluide produit en séparant la deuxième phase gazeuse ou liquide.
- les premier et deuxième fluides se refroidissent dans le même échangeur de chaleur, de préférence par échange de chaleur avec au moins une partie de la troisième phase gazeuse et/ou au moins une partie de la troisième phase liquide.
- on comprime le deuxième fluide jusqu'à une pression supérieure à celle de la colonne à distiller et le deuxième fluide est détendu en amont de la colonne.
- on envoie la première phase liquide et le deuxième fluide ou la deuxième phase liquide à des niveaux différents de la colonne.
- on mélange la première phase liquide et le deuxième fluide ou la deuxième phase liquide en amont de la colonne, éventuellement après avoir détendu le fluide et/ou au moins un des liquides.
- le premier fluide provient, de préférence exclusivement, d'une première source et le deuxième fluide provient, de préférence exclusivement, d'une deuxième source autre que la première source
- le deuxième fluide provient, de préférence exclusivement, d'au moins une unité de reformage d'hydrocarbures ou d'au moins une unité de combustion ou d'au moins une unité de séparation par condensation partielle et/ou distillation.
- le premier fluide provient, de préférence exclusivement, d'au moins une unité d'absorption, telle qu'au moins une unité de lavage aux amines ou au méthanol ou d'au moins une unité d'adsorption, telle qu'une unité d'adsorption à bascule de pression ou d'au moins une unité de combustion, par exemple une unité d'oxycombustion.
- le premier fluide provient exclusivement d'au moins une unité d'absorption, telle qu'au moins une unité de lavage aux amines ou au méthanol
- le premier fluide provient exclusivement, d'au moins une unité d'adsorption, telle qu'une unité d'adsorption à bascule de pression ou d'au moins une unité de combustion, par exemple une unité d'oxycombustion
- le premier fluide est comprimé dans un premier compresseur et le deuxième fluide est comprimé dans un deuxième compresseur, les deux compresseurs étant entraînés de préférence par des moyens différents
- le premier fluide est comprimé par le premier compresseur jusqu'à une pression plus haute que celle à laquelle le deuxième fluide est comprimé par le deuxième compresseur
- la première phase liquide est envoyée à la colonne à un niveau au-dessus du niveau auquel est envoyé le deuxième fluide condensé ou la deuxième phase liquide
- le premier fluide est comprimé jusqu'à une pression entre 8 et 12 bars abs
- le deuxième fluide est comprimé jusqu'à une pression entre 8 et 25 bars abs
- la colonne opère à entre 8 et 12 bars abs.
- le premier fluide est séché dans un premier sécheur et le deuxième fluide est séché dans un deuxième sécheur indépendant du premier sécheur.
- le premier fluide est refroidi dans un premier refroidisseur et le deuxième fluide est refroidi dans un deuxième refroidisseur indépendant du premier refroidisseur.
- le premier fluide est refroidi dans un premier refroidisseur en amont de l'échangeur de chaleur et le deuxième fluide est refroidi dans un deuxième refroidisseur indépendant du premier refroidisseur en amont de l'échangeur de chaleur .
- le premier fluide envoyé au premier refroidisseur est à une température différente du deuxième fluide envoyé au deuxième refroidisseur

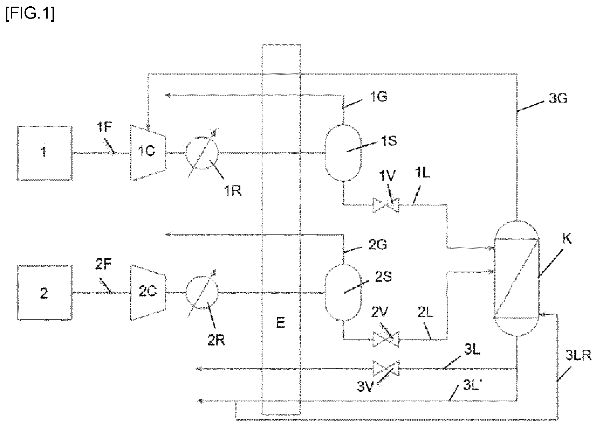

L'invention sera décrite de manière plus détaillée en se référant à la [FIG.1].

[FIG.1] illustre un procédé selon l'invention.

Une première source 1 produit un premier fluide 1F comprenant au moins 35%v mais moins que 90%v en CO2. La première source 1 peut être au moins une unité d'absorption, telle qu'une unité de lavage aux amines ou au méthanol et/ou au moins une unité d'adsorption, telle qu'une unité d'adsorption à bascule de pression et/ou au moins une unité d'oxycombustion. De préférence le premier fluide 1F provient exclusivement de la première source 1.

Le premier fluide 1F contient au moins une première impureté plus légère que le CO2, tel que le méthane, le monoxyde de carbone, le dihydrogène, l'azote, l'oxygène ou l'argon. L'impureté principale plus légère que le CO2, dont la teneur est plus élevée que la ou les autres impuretés plus légères que le CO2, peut être le méthane, le monoxyde de carbone, le dihydrogène, l'azote, l'oxygène ou l'argon. On comprime le premier fluide 1F dans un premier compresseur 1C, éventuellement séché dans un premier sécheur, ensuite on refroidit le premier fluide comprimé d'abord par un refroidisseur 1R et ensuite dans un échangeur de chaleur E où le premier fluide 1F se condense partiellement générant une première phase gazeuse 1G appauvrie en CO2 et enrichie en l'au moins une première impureté et une première phase liquide 1L enrichie en CO2 et appauvrie en l'au moins une première impureté dans un séparateur de phases 1S. On détend la première phase liquide 1L dans une vanne 1V et on l'envoie en haut d'une colonne à distiller K.

La première source 1 peut être d'une unité de reformage d'hydrocarbures ou d'une unité de combustion. De préférence le premier fluide provient exclusivement de la première source 1.

Une deuxième source 2 produit un deuxième fluide 2F comprenant au moins 95%v en CO2. La deuxième source est de préférence au moins une unité de reformage d'hydrocarbures et/ou au moins une unité de combustion et/ou au moins une unité de séparation par condensation partielle et/ou distillation.

Le deuxième fluide 2F contient au moins une deuxième impureté plus légère que le CO2, tel que le méthane, le monoxyde de carbone, le dihydrogène, l'azote, l'oxygène ou l'argon. L'impureté principale plus légère que le CO2, dont la teneur est plus élevée que la ou les autres impuretés plus légères que le CO2, peut être le méthane, le monoxyde de carbone, le dihydrogène, l'azote, l'oxygène ou l'argon. On comprime le deuxième fluide 2F dans un deuxième compresseur 2C, éventuellement on le sèche dans un deuxième sécheur, ensuite on refroidit le deuxième fluide comprimé d'abord par un refroidisseur 2R et ensuite dans un échangeur de chaleur E où le deuxième fluide 2F se condense partiellement générant une deuxième phase gazeuse 2G appauvrie en CO2 et enrichie en l'au moins une deuxième impureté et une deuxième phase liquide 2L enrichie en CO2 et appauvrie en l'au moins une deuxième impureté dans un séparateur de phases 2S. On détend la première phase liquide 2L dans une vanne 2V et on l'envoie à une colonne à distiller K à un niveau en dessous du niveau d'injection du liquide 1L.

Sinon le liquide 2L peut être envoyé à un niveau au-dessus du niveau d'injection du liquide 1L.

L'étape de condensation partielle du deuxième fluide n'est pas essentielle. Le deuxième fluide 2F peut être envoyé à la colonne K sous forme gazeuse ou liquide, ayant été liquéfié dans l'échangeur de chaleur E.

Selon une variante, le deuxième fluide peut ainsi être condensé totalement, soit à la pression de la colonne soit à une pression supérieure à celle de la colonne auquel cas, il est détendu en amont de la colonne. Le deuxième fluide condensé est donc envoyé à la colonne à distillation pour être séparé à un niveau en dessous du niveau d'injection du liquide 1L.

Le deuxième fluide peut être au plus partiellement condensé à une pression moins élevée à celle à laquelle le premier fluide est partiellement condensé, puisqu'il contient plus de CO2.

La colonne à distiller K génère une troisième phase gazeuse 3G appauvrie en CO2 et enrichie en l'au moins une première impureté en tête de colonne et une troisième phase liquide enrichie en CO2 et appauvrie en l'au moins une première impureté. La troisième phase liquide est divisé en deux débits, dont un 3L est vaporisé dans l'échangeur de chaleur E à la pression de la colonne K et un autre 3L' est détendu dans une vanne 3V dans l'échangeur de chaleur E à une pression inférieure à celle de la colonne K. Une partie du débit 3L' vaporisé est renvoyée à la température de l'extrémité chaude de l'échangeur de chaleur E en cuve de la colonne K.

Le gaz 3G se réchauffe dans l'échangeur de chaleur E ou sinon peut être envoyé à l'air sans être réchauffé.

Il sera compris dans ce document que des températures cryogéniques peut monter jusqu'à -40°C.

## Revendications

1. Procédé de purification de CO2 dans lequel :
i) On comprime un premier fluide (1F) comprenant au moins 35%v mais moins que 90%v en CO2 et contenant au moins une première impureté plus légère que le CO2, tel que le méthane, le monoxyde de carbone, le dihydrogène, l'azote, l'oxygène ou l'argon, on refroidit le premier fluide comprimé, on le condense partiellement générant une première phase gazeuse (1G) appauvrie en CO2 et enrichie en l'au moins une première impureté et une première phase liquide (1L) enrichie en CO2 et appauvrie en l'au moins une première impureté et on détend la première phase liquide.
ii) On comprime un deuxième fluide (2F), autre que la première phase gazeuse ou liquide ou un fluide produit en séparant la première phase gazeuse ou liquide, comprenant au moins 95%v en CO2 et contenant au moins une deuxième impureté plus légère comme le méthane, le monoxyde de carbone, le dihydrogène, l'azote, l'oxygène ou l'argon, on refroidit le deuxième fluide comprimé soit en le condensant totalement soit en condensant le deuxième fluide comprimé et refroidi partiellement générant une deuxième phase gazeuse (2G) appauvrie en CO2 et enrichie en l'au moins une deuxième impureté et une deuxième phase liquide (2L) enrichie en CO2 et appauvrie en l'au moins une deuxième impureté et éventuellement on détend la deuxième phase liquide.
iii) On injecte la première phase liquide détendu et soit le deuxième fluide comprimé, refroidi et condensé soit la deuxième phase liquide, éventuellement détendu, dans une colonne à distiller (K) générant une troisième phase gazeuse (3G) appauvrie en CO2 et enrichie en l'au moins une première impureté et une troisième phase liquide (3L, 3L') enrichie en CO2 et appauvrie en l'au moins une première impureté.

2. Procédé selon la revendication 1 dans lequel la troisième phase gazeuse (3G) est enrichie en l'au moins une deuxième impureté et une troisième phase liquide (3L, 3L') est appauvrie en l'au moins une deuxième impureté.

3. Procédé selon la revendication 1 ou 2 dans lequel le premier fluide (1F) comprend une première impureté principale plus légère que le CO2 dont la teneur est plus grande que tout autre impureté plus légère que le CO2 du premier fluide et le deuxième fluide (2F) comprend une deuxième impureté principale plus légère que le CO2 dont la teneur est plus grande que tout autre impureté plus légère que le CO2 du deuxième fluide, la première impureté principale n'ayant pas la même composition chimique que la deuxième impureté principale.

4. Procédé selon une des revendications précédentes dans lequel le premier fluide (1F) est un fluide autre que la deuxième phase gazeuse (2G) ou liquide (2L) ou un fluide produit en séparant la deuxième phase gazeuse ou liquide.

5. Procédé selon une des revendications précédentes dans lequel les premier et deuxième fluides (1F, 2F) se refroidissent dans le même échangeur de chaleur, de préférence par échange de chaleur avec au moins une partie de la troisième phase gazeuse (3G) et/ou au moins une partie de la troisième phase liquide (3L, 3L').

6. Procédé selon une des revendications précédentes dans lequel on comprime le deuxième fluide (2F) jusqu'à une pression supérieure à celle de la colonne à distiller et le deuxième fluide est détendu en amont de la colonne.

7. Procédé selon une des revendications précédentes dans lequel on envoie la première phase liquide (1L) et le deuxième fluide (2F) ou la deuxième phase liquide (2L) à des niveaux différents de la colonne.

8. Procédé selon une des revendications précédentes 1 à 6 dans lequel on mélange la première phase liquide (1L) et le deuxième fluide (2F) ou la deuxième phase liquide (2L) en amont de la colonne, éventuellement après avoir détendu le fluide et/ou au moins un des liquides.

9. Procédé selon une des revendications précédentes dans lequel le deuxième fluide (2F) provient, de préférence exclusivement, d'au moins une unité de combustion ou d'au moins une unité de séparation par condensation partielle et/ou distillation.

10. Procédé selon une des revendications précédentes dans lequel le deuxième fluide (2F) provient, de préférence exclusivement, d'au moins une unité de reformage d'hydrocarbures.

11. Procédé selon une des revendications précédentes dans lequel le premier fluide (1F) provient d'au moins une unité d'absorption, telle qu'une unité de lavage aux amines ou au méthanol ou d'au moins une unité d'adsorption, telle qu'une unité d'adsorption à bascule de pression ou d'au moins une unité d'oxycombustion.

12. Procédé selon la revendication 11 dans lequel le premier fluide (1F) provient exclusivement d'au moins une unité d'absorption, telle qu'une unité de lavage aux amines ou au méthanol.

13. Procédé selon la revendication 11 dans lequel le premier fluide (1F) provient exclusivement d'au moins une unité d'adsorption, telle qu'une unité d'adsorption à bascule de pression ou d'au moins une unité d'oxycombustion.

14. Procédé selon l'une des revendication précédentes dans lequel le premier fluide (1F) est séché dans un premier sécheur et le deuxième fluide (2F) est séché dans un deuxième sécheur indépendant du premier sécheur.

15. Procédé selon l'une des revendication précédentes dans lequel le premier fluide (1F) est refroidi dans un premier refroidisseur (R1) et le deuxième fluide (2F) est refroidi dans un deuxième refroidisseur (R2) indépendant du premier refroidisseur.
